# EUROPÄISCHE PATENTSCHRIFT

(11) **EP 1 704 002 B1**
(45) Veröffentlichungstag und Bekanntmachung des Hinweises auf die Patenterteilung: **11.08.2010**
(21) Anmeldenummer: 04803536.4
(22) Anmeldetag: 06.12.2004
(51) Int. Cl.: B21D 22/02, B21D 22/22, B23P 15/00

(54) **VERFAHREN UND VORRICHTUNG ZUM HERSTELLEN EINES DÜNNWANDIGEN BAUTEILS**
METHOD AND DEVICE FOR THE PRODUCTION OF A THIN-WALLED PART
PROCEDE ET DISPOSITIF POUR FABRIQUER UN COMPOSANT A PAROI MINCE

(30) Priorität: 11.12.2003 DE 10358287
(43) Veröffentlichungstag der Anmeldung: 27.09.2006
(73) Patentinhaber: Feintool International Holding AG, 3250 Lyss (CH)
(72) Erfinder: SCHLATTER, Ulrich, CH-3250 Lyss (CH)
(74) Vertreter: Weiss, Peter
(86) Internationale Anmeldenummer: PCT/EP2004/013826
(87) Internationale Veröffentlichungsnummer: WO 2005/056231

(56) Entgegenhaltungen:
- EP-A- 0 722 792
- WO-A-00/43145
- CH-A5- 636 542
- DE-A1- 4 437 399

## Beschreibung

Die Erfindung betrifft ein Verfahren zum Herstellen eines dünnwandigen Bauteils, insbesondere eines Rohrabschnitts sowie eine Vorrichtung hierfür.

### Stand der Technik

Bauteile werden heute in vielfältiger Form und Ausführung benötigt und hergestellt. Beispielsweise werden aus einem Metallstreifen Bauteile durch Stanzen oder Feinschneiden herausgeformt. Aus der DE 199 53 059 A1 ist beispielsweise ein Aufnahmelager zum Aufnehmen und/oder Bewegen von zumindest einer Lesekopfeinrichtung bekannt, bei dem zwei Plattenelemente exakt beabstandet und positioniert werden. Dies geschieht durch Abstandselemente, die durch Feinschneiden und/oder durch Kaltformen aus dem Plattenelement gebildet werden.

Aus der CH 636 542 ist ein Verfahren zur Herstellung von Bördelbüchsen und Bördelbüchsen bekannt, bei welchem das Tiefziehverfahren angewendet wird. Hierbei wird das Ausgangmaterial einer Reihe von Tiefziehstationen zugeführt, so dass eine Art Napf entsteht. Anschliessend wird der Boden des Napfes durchstossen, wobei das freiwerdende Material nach der Seite verdrängt wird. Anschliessend erfolgen weitere Tiefziehvorgänge bis die Bördelbüchse fertig hergestellt ist.

Bei der vorliegenden Erfindung geht es um die Herstellung von zylindrischen Bauelementen oder beispielsweise Rohrabschnitten. Speziell geht es um die Herstellung von Nockenringen für gebaute Nockenwellen zum Einbau in Verbrennungsmotoren. Heute werden die Einzelnocken als Schmiederohling mit anschliessender Bearbeitung sowie spanabhebend ab einem Präzisionsrohr mit anschliessender spanloser Formgebung hergestellt.

### Aufgabe

Der vorliegenden Erfindung liegt die Aufgabe zugrunde, ein Verfahren und eine Vorrichtung der o.g. Art zu schaffen, mit welchen dünnwandige Bauteile mit hoher Präzision hergestellt werden können. Ferner soll im Gegensatz zum herkömmlichen Feinschneiden das Materialeinsatzgewicht und somit der Materialkostenanteil wesentlich reduziert werden.

### Lösung der Aufgabe

Zur Lösung dieser Aufgabe führen die Merkmale des Patentanspruches 1.

Das bedeutet, dass beispielsweise ein Rohrabschnitt im Feinschneid-Umformverfahren hergestellt werden kann. Das Besondere der Herstellung ist, dass das Stanzen bzw. Feinschneiden konventionell am dickwandigen Blech und das Umformen zum dünnwandigen Bauteil durch Kaltverformen stattfindet. Dadurch kann der Materialabfall auf ein Minimum reduziert werden. Ferner werden dünnwandige Rohrabschnitte mit der geforderten Präzision hergestellt, beispielsweise mit einer Dickenabweichungstoleranz von 1/10 und einer Formgenauigkeit von ±0,06. Auf dem Markt gibt es heute keine derartigen Rohre, von denen solche Rohrabschnitte abgeschnitten werden können.

Die Herstellung des Bauteils geschieht bevorzugt in zumindest fünf Stufen. In einer ersten Stufe wird eine Aufspannplatte, eine führungsplatte und ein Ziehstempel verwendet. In die Stirnfläche der Aufspannplatte ist eine Mulde eingeformt, wobei hier vor allem Wert auf die Schräge der Mulde zu einem Muldenboden hin zu legen ist. Ein entsprechender Blechstreifen wird zwischen Aufspannplatte und Führungsplatte aufgespannt. Der Ziehstempel wird in einer Öffnung der Führungsplatte hin zu dem Blechstreifen bewegt, wobei der Ziehstempel einen Bereich des Blechstreifens in die Mulde eindrückt. Bei diesem "Tiefziehvorgang" erfolgt bereits bevorzugt eine Verdünnung der Bereiche die in die Mulde eingezogen werden.

Bei einem zweiten Werkzeug und in einer zweiten Arbeitsstufe wird nun der Materialstreifen mit dem tiefgezogenen Bereich zwischen einer Aufspannplatte und einer weiteren Führungsplatte eingespannt, wobei diese beiden Platten so geformt sind, dass eine Stützfläche der Aufspannplatte den schrägen Bereich des tiefgezogenen Bereichs untergreift, während die Führungsplatte den schrägen Bereich mit einem Druckwall übergreift. Ferner ist an der Führungsplatte eine Ringzacke vorgesehen, die ein Nachfliessen von Material von dem Materialstreifen vermeidet. Eine Führungsöffnung in der Führungsplatte und eine Öffnung in der Aufspannplatte haben eine Innenkontur, die in etwa in der gleichen Ebene liegen. In beiden Öffnungen wird ein Schneidstempel geführt, so dass aus dem tiefgezogenen Bereich des Materialstreifens eine Innenkontur herausgeschnitten wird.

In einer weiteren Verfahrensstufe wird ein Randbereich des Bauteils, welcher im wesentlichen aus dem schräg verlaufenden Bereich besteht, in einer oder mehreren Stufen abgebogen. Soll ein Rohrabschnitt hergestellt werden, so geschieht das Abbiegen bzw. das Abstrecken um ca. 90° gegenüber dem Materialstreifen der vorläufig noch weiter zwischen Aufspannplatte und Führungsplatte gehalten ist.

Damit Raum für den Wandbereich des Bauteils bleibt, weist eine entsprechende Aufspannplatte ein Ecksicke auf, welche eine Tiefe besitzt, die etwa der Wandstärke des Bauteils entspricht. Ferner kommt es beim Abstrecken des Bauteils bevorzugt zu einer weiteren Verminderung der Wandstärke des Bauteils.

In der nächsten Arbeitsstufe erfolgt ein Abschneiden des Bauteils von dem Materialstreifen, wobei letztendlich ein Teil der Aussenkontur des Bauteils erzeugt wird. In einem Ausführungsbeispiel ist hierfür ein Werkzeug vorgesehen, bei dem ein ortsfester Stempel einen Einzug infolge einer Schulterbildung aufweist. Die Schulterkante bildet eine Schneidkante. Die Tiefe des Einzugs entspricht wiederum der Wandstärke des Bauteils.

Das Schneiden erfolgt durch eine Hubbewegung einer Führungsplatte und einer Aufspannplatte gegenüber der Schneidkante des Stempels. Dabei umfängt die Führungsplatte den Stempel und hält den Blechstreifen mit dem noch daran angeordnetem Bauteil, welches die Aufspannplatte übergreift.

Nach dem Abschneiden kann beispielsweise ein Kalibrieren des Bauteils in dem Einzug des Stempels selbst erfolgen, beispielsweise durch Beaufschlagung des Bauteils mit einem entsprechenden Auswerferstempel. Letzterer wird dann auch zum Auswerfen des Bauteils verwendet.

Durch das erfindungsgemässe Verfahren bzw. in der erfindungsgemässen Vorrichtung können auf diese Art und Weise beispielsweise Nockenringe hergestellt werden, die auf eine stab- oder rohrförmige Welle aufgeschoben und auf dieser festgelegt werden. Um eine Radialbewegung des Rohrabschnitts gegenüber der Welle zu vermeiden, kann der Rohrabschnitt einen eiförmigen Querschnitt aufweisen.

Somit wird gemäss der vorliegenden Erfindung aus einem Dünnblech ein hochpräziser Ringkörper durch radiales Aufweiten bei gleichzeitiger Formgebung durch Abstrecken hergestellt. Innen- und Aussenform des Rings können wählbare Geometrien haben, beispielsweise kann der Ring oval sein, verzahnt, rund usw..

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Schnitt durch ein Werkzeug zum Ausziehen der Kontur eines Bauteils aus einem Materialstreifen;
Figur 2 einen teilweise dargestellten Schnitt durch ein Werkzeug zum Ausschneiden einer Innenkontur des Bauteils;
Figur 3 einen teilweise dargestellten Schnitt durch ein Werkzeug zum Abbiegen eines Wandbereichs des Bauteils;
Figur 4 und 5 Teilschnitte durch ein Werkzeug zum Abstrecken des Bauteils;
Figur 6 einen teilweise dargestellten Schnitt durch ein Werkzeug zum Ausschneiden einer Aussenkontur des Bauteils;
Figur 7 einen teilweise dargestellten Schnitt durch ein Werkzeug zum Kalibrieren und Auswerfen des Bauteils;
Figur 8 eine perspektivische Ansicht eines erfindungsgemässen Bauteils.

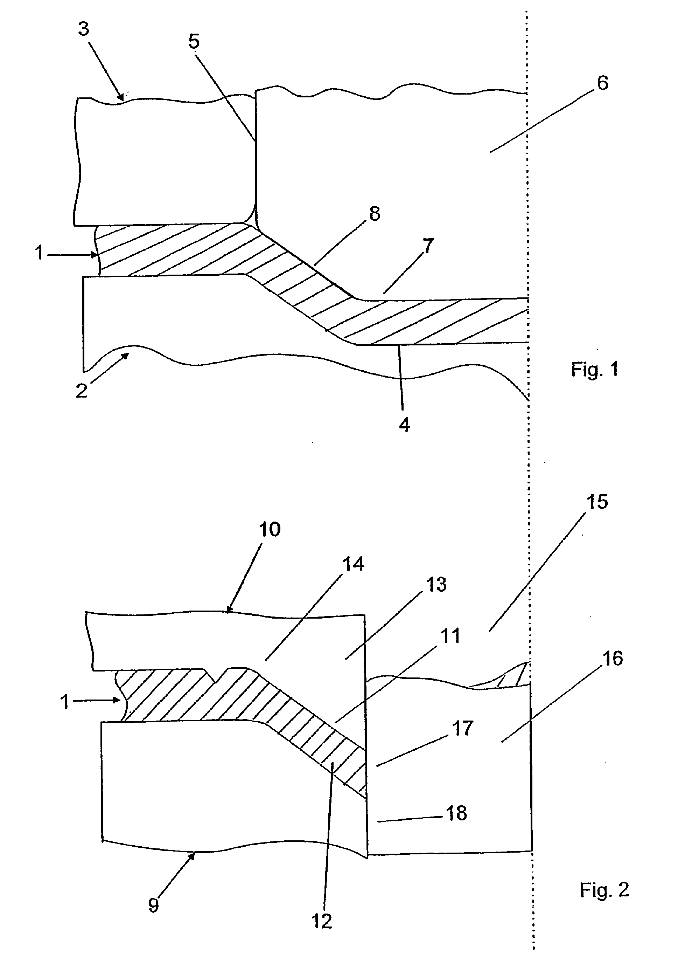

Ein Materialstreifen 1, bevorzugt ein Blechstreifen, wird gemäss Figur 1 zwischen einer Aufspannplatte 2 und einer Führungsplatte 3 gehalten. In eine Stirnfläche der Aufspannplatte 2 ist eine Mulde 4 eingeformt, während die Führungsplatte 3 eine Öffnung 5 zum Führen eines Ziehstempels 6 aufweist. Dieser Ziehstempel 6 weist bevorzugt eine Stirnfläche 7 auf, die in etwa der Kontur der Mulde 4 entspricht.

Wird der Ziehstempel 6 gegen die Aufspannplatte 2 bewegt, so drückt der Ziehstempel 6 aus dem Materialstreifen 3 eine Kontur 8 eines späteren Bauteils heraus.

In einer weiteren Verfahrensstufe gemäss Figur 2 wird der Materialstreifen 1 zusammen mit der Kontur 8 von einer weiteren Aufspannplatte 9 und einer Führungsplatte 10 gehalten. Die Aufspannplatte 9 untergreift dabei einen Wandbereich 11 des Bauteils mit einer Stützfläche 12, welche einer Schräge der Kontur 4 gemäss Figur 1 entspricht.

Mit der Stützfläche 12 wirkt ein Druckwall 13 an der Führungsplatte 10 zusammen, so dass der Wandbereich 11 zwischen dem Druckwall 13 und der Stützfläche 12 aufgenommen ist. Ferner greift die Führungsplatte 10 mit einer Ringzacke 14 in den Materialstreifen 11 ein. In einer Öffnung 15 in der Führungsplatte 10 ist ein Schneidstempel 16 geführt, durch den eine Innenkontur 17 des Wandbereichs 11 ausgeschnitten werden kann. Hierzu bewegt sich der Schneidstempel 16 in der Öffnung 15 der Führungsplatte 10 und greift nach dem Schneiden in eine Öffnung 18 in der Aufspannplatte 9 ein.

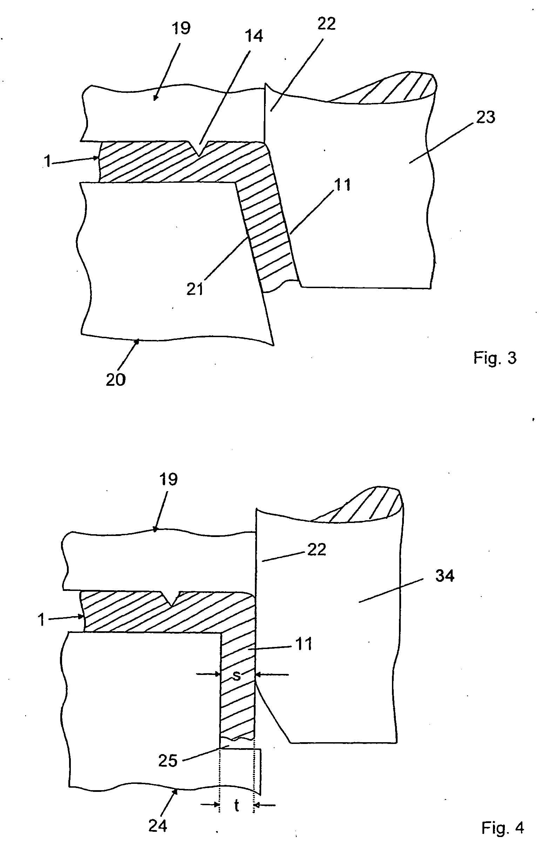

In einer weiteren Verfahrensstufe gemäss Figur 3 erfolgt ein Abbiegen des Wandbereichs 11, wobei der Materialstreifen 1 zusammen mit dem Wandbereich 11 zwischen einer Führungsplatte 19 mit der Ringzacke 14 und einer Aufspannplatte 20 gehalten ist. Eine Stützfläche 21 der Aufspannplatte 20 weist dabei eine grössere Schräge auf, als die Stützfläche 12 der Aufspannplatte 9 gemäss Figur 2.

Bei der Führungsplatte 19 fehlt der Druckwall gemäss Figur 2, jedoch wird in einer Öffnung 22 der Führungsplatte 19 ein Biegestempel 23 geführt.

Gemäss Figur 4 wird der Materialstreifen 1 zwischen der Führungsplatte 19 und einer Aufspannplatte 24 gehalten, welche eine Ecksicke 25 besitzt, die eine Tiefe t aufweist, die in etwa der Stärke s des Wandbereichs 11 entspricht. Im etwa ähnlichen Ausmass springt auch die Führungsplatte 19 über die Aufspannplatte 24.

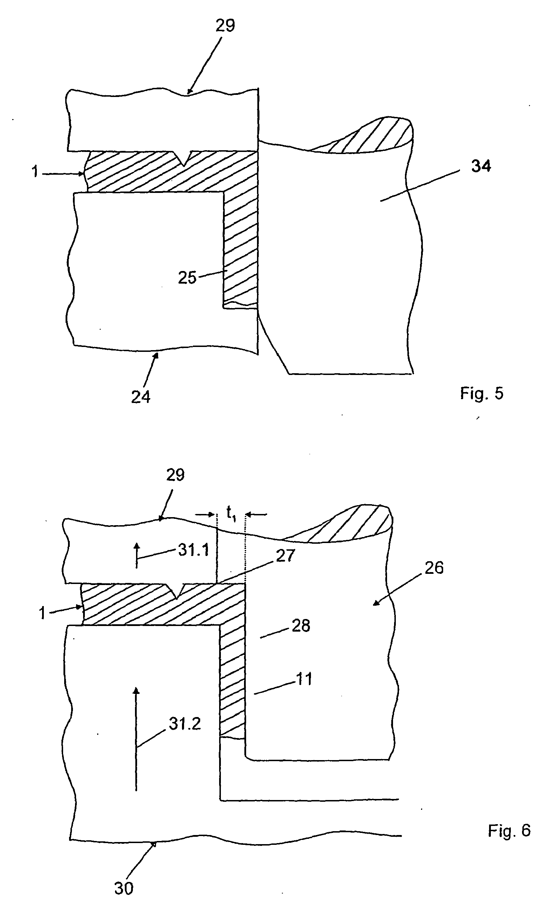

In der Öffnung 22 in der Führungsplatte 19 ist ein Streckstempel 34 geführt, der bewirkt, das der Wandbereich 11 gegenüber dem Materialstreifen 1 um etwa 90° abgebogen und, wie in Figur 5 erkennbar, in die Ecksicke 25 abgestreckt wird. Dies geschieht bevorzugt durch ein Kaltverformen, d.h., es wird Material des Wandbereichs 11 zum Ausfüllen der Ecksicke 25 verwandt, so dass sich die Stärke s des Wandbereichs 11 verringert.

Gemäss Figur 6 wird nun der Wandbereich 11 von dem Materialstreifen 1 abgetrennt. Hierzu wird ein statischer Schneidstempel 26 verwendet, der eine Schneidkante 27 aufweist. Nach der Schneidkante 27 ist ein Einzug 28 an dem Schneidstempel 26 ausgebildet, wobei eine Tiefe t₁ des Einzugs 28 in etwa einer Wandstärke s₁ des endgültigen Bauteils entspricht.

Der Materialstreifen 1 wird von einer Führungsplatte 29 und einer Aufspannplatte 30 gehalten, die zusammen relativ gegenüber dem Schneidstempel 26 bewegbar sind, wie dies durch die Pfeile 31.1 und 31.2 angedeutet ist. Durch die Bewegung wird im Zusammenwirken mit der Schneidkante 27 der Wandbereich 11 von dem Materialstreifen 1 abgeschnitten.

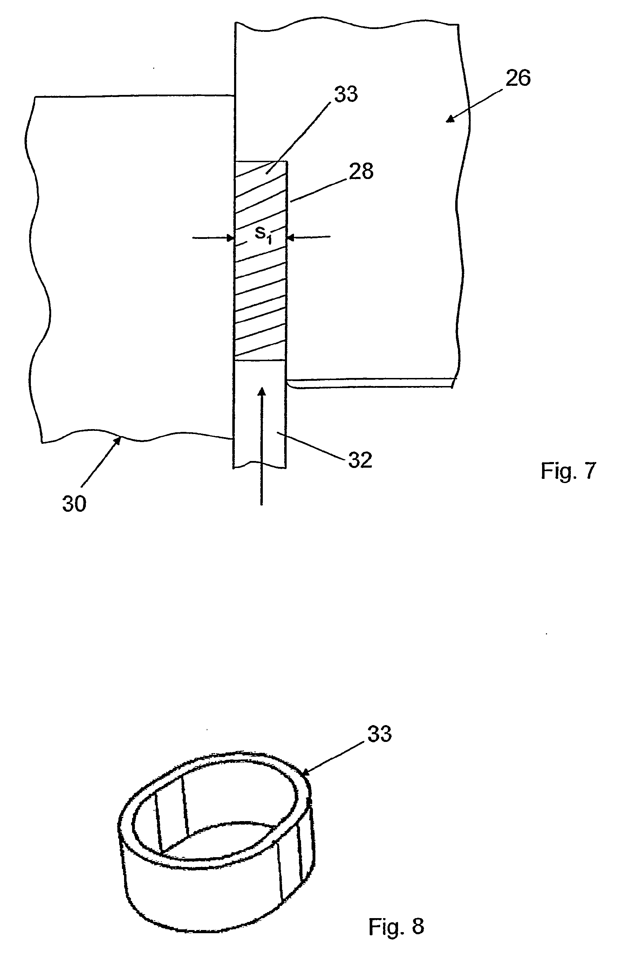

In Figur 7 erfolgt nun im Zusammenhang mit dem Schneidstempel 26 und einem Auswerfer 32 ein Kalibrieren des Bauteils 33, dem nunmehr seine endgültige Form gegeben wird.

Nach Entfernen des Schneidstempels 26 kann das Bauteil 33 aus der Ausspannplatte 30 ausgeworfen werden.

**Positionszahlenliste**

| | | | | | |
|---|---|---|---|---|---|
| 1 | Materialstreifen | 34 | Streckstempel | 67 | |
| 2 | Aufspannplatte | 35 | | 68 | |
| 3 | Führungsplatte | 36 | | 69 | |
| 4 | Mulde | 37 | | 70 | |
| 5 | Öffnung | 38 | | 71 | |
| 6 | Ziehstempel | 39 | | 72 | |
| 7 | Stirnfläche | 40 | | 73 | |
| 8 | Kontur | 41 | | 74 | |
| 9 | Aufspannplatte | 42 | | 75 | |
| 10 | Führungsplatte | 43 | | 76 | |
| 11 | Wandbereich | 44 | | 77 | |
| 12 | Stützfläche | 45 | | 78 | |
| 13 | Druckwall | 46 | | 79 | |
| 14 | Ringzacke | 47 | | | |
| 15 | Öffnung | 48 | | | |
| 16 | Schneidstempel | 49 | | | |
| 17 | Innenkontur | 50 | | | |
| 18 | Öffnung | 51 | | | |
| 19 | Führungsplatte | 52 | | | |
| 20 | Aufspannplatte | 53 | | | |
| 21 | Stützfläche | 54 | | | |
| 22 | Öffnung | 55 | | | |
| 23 | Streckstempel | 56 | | | |
| 24 | Aufspannplatte | 57 | | | |
| 25 | Ecksicke | 58 | | | |
| 26 | Biegestempel | 59 | | | |
| 27 | Schneidkante | 60 | | s₁ | Wandstärke |
| 28 | Einzug | 61 | | s | Stärke von 11 |
| 29 | Führungsplatte | 62 | | t | Tiefe von 25 |
| 30 | Aufspannplatte | 63 | | t₁ | Tiefe von 28 |
| 31 | Pfeile | 64 | | | |
| 32 | Auswerfer | 65 | | | |
| 33 | Bauteil | 66 | | | |

## Patentansprüche

1. Verfahren zum Herstellen eines dünnwandigen Bauteils (33), insbesondere eines Rohrabschnitts, wobei ein Materialstreifen (1) zwischen einer Aufspannplatte mit einer Mulde (4), einer Führungsplatte (3) zum Führen eines Ziehstempels (6) eingespannt und durch den Ziehstempel (6) eine Kontur für das Bauteil (33) in die Mulde (4) in der Aufspannungsplatte (2) eingezogen wird, wonach ein Ausschneiden einer Innenkontur (17) und anschliessend ein Abstrecken eines Wandbereichs (11) des Bauteils (33) zwischen Innenkontur (17) und übrigem Materialstreifen (1) erfolgt, danach eine Aussenkontur des Bauteils (33) vom Materialstreifen (1) abgeschnitten und das Bauteil (33) ausgeworfen wird.

2. Verfahren nach Anspruch 1, **dadurch gekennzeichnet, dass** durch den Ziehstempel (6) die Wand (11) des Bauteils (33) schräg vom Materialstreifen (1) abgebogen wird.

3. Verfahren nach Anspruch 1 oder 2, **dadurch gekennzeichnet, dass** durch den Ziehstempel (6) die Stärke (s) der Wand (11) des Bauteils (33) gegenüber der Dicke des Metallstreifens (1) vermindert wird.

4. Verfahren nach einem der Ansprüche 1 bis 3, **dadurch gekennzeichnet, dass** beim Abstrecken des Bauteils (33) dessen Wand (11) um 90° gegenüber dem Materialstreifen (1) umgeformt wird.

5. Verfahren nach wenigstens einem der Ansprüche 1 bis 4, **dadurch gekennzeichnet, dass** beim Abstrecken des Bauteils (33) dessen Wandstärke (s) gegenüber der Dicke des Metallstreifens (1) vermindert wird.

6. Verfahren nach wenigstens einem der Ansprüche 1 bis 5, **dadurch gekennzeichnet, dass** das Bauteil (33) nach dem Abschneiden von dem Materialstreifens (1) kalibriert wird.

7. Verfahren nach wenigstens einem der Ansprüche 1 bis 6, **dadurch gekennzeichnet, dass** zwischen dem Ausschneiden der Innenkontur (17) und dem Abstrecken zumindest ein weiteres Abbiegen der Wand (11) des Bauteils (33) erfolgt.

8. Verfahren nach wenigstens einem der Ansprüche 1 bis 7, **dadurch gekennzeichnet, dass** das Bauteil ein Rohrabschnitt (33) ist, welcher auf eine stab- oder rohrförmige Welle einer Nockenwelle mit darauf angeordneten Nocken aufgesetzt und dort festgelegt wird.

9. Verfahren nach Anspruch 8, **dadurch gekennzeichnet, dass** die Rohrabschnitte (33) auf der Welle durch Schweissen festgelegt werden.

10. Verfahren nach Anspruch 8 oder 9, **dadurch gekennzeichnet, dass** die Rohrabschnitte (33) mit einem eiförmigen Querschnitt ausgebildet werden.

## Claims

1. Method for the production of a thin-walled part (33), especially a pipe section, in which a strip (1) of material is clamped between a clamping plate with a cavity (4) and a guide plate (3) to guide a drawing die (6), and a contour for the part (33) is drawn by the drawing die (6) into the cavity (4) in the clamping plate (2), after which cutting of an inner contour (17) followed by ironing of a wall area (11) of the part (33) between the inner contour (17) and the rest of the strip (1) of material takes place, and then an outer contour of the part (33) is cut from the strip (1) of material and the part (33) is ejected.

2. Method according to Claim 1, **characterised in that** the wall (11) of the part (33) is bent at an angle from the strip (1) of material by the drawing die (6).

3. Method according to Claim 1 or 2, **characterised in that** the thickness (s) of the wall (11) of the part (33) in relation to the thickness of the strip (1) of material is reduced by the drawing die (6).

4. Method according to one of Claims 1 to 3, **characterised in that**, when ironing the part (33), its wall (11) is formed by 90° in relation to the strip (1) of material.

5. Method according to at least one of Claims 1 to 4, **characterised in that**, when ironing the part (33), its wall thickness (s) is reduced in relation to the thickness of the strip (1) of material.

6. Method according to at least one of Claims 1 to 5, **characterised in that** the part (33) is calibrated after cutting-off from the strip (1) of material.

7. Method according to at least one of Claims 1 to 6, **characterised in that**, between cutting of the inner contour (17) and ironing, at least one further bending of the wall (11) of the part (33) takes place.

8. Method according to at least one of Claims 1 to 7, **characterised in that** the part is a pipe section (33), which is placed on a bar-shaped or pipe-shaped shaft of a camshaft with cams arranged thereon and is secured thereto.

9. Method according to Claim 8, **characterised in that** the pipe sections (33) are secured to the shaft by welding.

10. Method according to Claim 8 or 9, **characterised in that** the pipe sections (33) are configured with an egg-shaped cross-section.

## Revendications

1. Procédé de fabrication d'un composant à mince paroi (33), en particulier un segment de tube, une bande de matériau (1) étant serrée entre une plaque de serrage avec une cuvette (4), une plaque de guidage (3) destinée à guider un poinçon d'emboutissage (6) et par le poinçon d'emboutissage (6) étant piqué un contour du composant (33) dans la cuvette (4) dans la plaque de serrage (2), après quoi a lieu un découpage d'un contour intérieur (17) et ensuite une délimitation d'une zone de paroi (11) du composant (33) entre le contour intérieur (17) et le reste de la bande de matériau (1), ensuite étant découpé un contour extérieur du composant (33) de la bande de matériau (1) et le composant (33) étant éjecté.

2. Procédé selon la revendication 1, **caractérisé par le fait que**, par le poinçon d'emboutissage (6), la paroi (11) du composant (33) est écartée obliquement de la bande de matériau (1) par pliage.

3. Procédé selon la revendication 1 ou 2, **caractérisé par le fait que**, par le poinçon d'emboutissage (6), l'épaisseur (s) de la paroi (11) du composant (33) est réduite par rapport à l'épaisseur de la bande de matériau (1).

4. Procédé selon l'une des revendications 1 à 3, **caractérisé par le fait que**, lors de la délimitation du composant (33), sa paroi (11) est déformée de 90° par rapport à la bande de matériau (1).

5. Procédé selon au moins l'une des revendications 1 à 4, **caractérisé par le fait que**, lors de la délimitation du composant (33), son épaisseur de paroi (s) est réduite par rapport à l'épaisseur de la bande de matériau (1).

6. Procédé selon au moins l'une des revendications 1 à 5, **caractérisé par le fait que** le composant (33) est étalonné après le découpage de la bande de matériau (1).

7. Procédé selon au moins l'une des revendications 1 à 6, **caractérisé par le fait qu'**entre le découpage du contour intérieur (17) et la délimitation a lieu au moins un autre écartement de la paroi (11) du composant (33) par pliage.

8. Procédé selon au moins l'une des revendications 1 à 7, **caractérisé par le fait que** le composant est un segment de tube (33) qui est placé sur un arbre en forme de barre ou de tube d'un arbre à cames avec des cames y disposées, et y est fixé.

9. Procédé selon la revendication 8, **caractérisé par le fait que** les segments de tube (33) sont fixés à l'axe par soudage.

10. Procédé selon la revendication 8 ou 9, **caractérisé par le fait que** les segments de tube (33) sont réalisés de section oviforme.
